# EUROPÄISCHE PATENTSCHRIFT

(11) **EP 2 084 806 B1**
(45) Veröffentlichungstag und Bekanntmachung des Hinweises auf die Patenterteilung: **31.10.2012**
(21) Anmeldenummer: 07729274.6
(22) Anmeldetag: 18.05.2007
(51) Int. Cl.: H02K 1/18, H02K 1/14

(54) **ELEKTROMOTOR UND VERFAHREN ZUR HERSTELLUNG EINES ELEKTROMOTORS FÜR EINEN KRAFTFAHRZEUG-STELLANTRIEB**
ELECTRIC MOTOR AND METHOD FOR MANUFACTURING AN ELECTRIC MOTOR FOR A MOTOR VEHICLE ACTUATOR DRIVE
MOTEUR ÉLECTRIQUE ET PROCÉDÉ DE FABRICATION D'UN MOTEUR ÉLECTRIQUE POUR UN SERVOMOTEUR AUTOMOBILE

(30) Priorität: 02.06.2006 DE 102006025923
(43) Veröffentlichungstag der Anmeldung: 05.08.2009
(73) Patentinhaber: Brose Fahrzeugteile GmbH & Co. KG, Würzburg, 97076 Würzburg (DE)
(72) Erfinder: BUBAN, Tobias, 73733 Esslingen (DE)
(74) Vertreter: Isarpatent
(86) Internationale Anmeldenummer: PCT/EP2007/054829
(87) Internationale Veröffentlichungsnummer: WO 2007/141126

(56) Entgegenhaltungen:
- EP-A- 1 592 107
- DE-U- 1 973 001
- US-A- 2 502 121
- US-A1- 2004 217 669

## Beschreibung

Die Erfindung betrifft einen Elektromotor und ein Verfahren zur Herstellung eines Elektromotors für einen Kraftfahrzeug-Stellantrieb.

Elektromotoren für Kraftfahrzeug-Stellantriebe sind bereits bekannt. Sie dienen beispielsweise als Fensterhebermotor, als Antriebsmotor für eine Verstellung des Schiebe-/Hebedaches oder zur Unterstützung des Lenkvorganges eines Kraftfahrzeugs. Eine spezielle Ausführung eines solchen Motors ist beispielsweise ein bürstenlos kommutierter Motor mit Innenläufer und elektrisch erregtem Stator. Ein solcher weist im Allgemeinen ein Motorgehäuse, eine in das Motorgehäuse eingesetzte Statorbaugruppe mit bewickelten Statorzähnen und eine konzentrisch innerhalb der Statorbaugruppe in das Motorgehäuse eingesetzte Rotorbaugruppe auf. Zur Rotorbaugruppe gehören eine Rotorwelle und ein an der Rotorwelle befestigtes Rotorpaket. Je nach Ausführung kann die Rotorbaugruppe ebenfalls mit Wicklungen elektrisch erregt werden oder als permanenterregter Rotor mit Permanentmagneten ausgerüstet sein. Die Befestigung der Statorbaugruppe im Motorgehäuse erfolgt bei vielen bekannten Motoren durch ein Verkleben oder ein Einbringen einer Vergussmasse, die im ausgehärteten Zustand die Statorbaugruppe fest mit dem Motorgehäuse verbindet. Ein Nachteil einer Befestigung der Statorbaugruppe im Motorgehäuse durch Verkleben oder unter Verwendung einer Vergussmasse besteht darin, dass ein Zerlegen des jeweiligen Motors, zum Beispiel zu Reperaturzwecken, ohne eine Beschädigung desselben nicht möglich ist.

Eine weitere Möglichkeit zur Verbindung eines Stators eines Elektromotors mit einem Motorgehäuse zeigt beispielsweise die Offenlegungsschrift DE 102 57 889 A1. Bei dieser Verbindung ist der Stator koaxial in das Motorgehäuse eingebracht und von diesem umgriffen. Zur Befestigung ist wenigstens eine Klammer zwischen Stator und Motorgehäuse eingebracht, um den Stator im Motorgehäuse zu verspannen. Die Klammern bilden dabei eine tangentiale Verkeilung des Stators mit dem Gehäuse.

Auch die Offenlegungsschrift DE 102 61 617 A1 offenbart eine elektrische Maschine mit einem Gehäuse und einem im Gehäuse angeordneten Statorpaket. Das Gehäuse und das Statorpaket sind durch federnde Spannmittel miteinander verspannt. Dabei wird ein vorhandenes, fertigungsbedingtes Spiel zwischen Gehäuse und Statorpaket durch den Einsatz der federnden Spannmittel, die zwischen Gehäuse und Statorpaket angeordnet sind, ausgeglichen

Durch das Einfügen von Spannmitteln zwischen Gehäusewand und Stator wird durch die Spannmittel quasi punktuell eine Kraft in radialer Richtung auf die Gehäusewandung ausgeübt. Dadurch besteht die Gefahr, dass Gehäusewand und Statoroberfläche auseinandergedrückt werden und sich ein Spalt dazwischen ausbildet. Häufig ist die Gehäusewand zur Führung des magnetischen Flusses als Teil des Ständerjochs mit vorgesehen. In diesem Fall wirken entstehende Luftspalte zwischen Gehäusewand und Ständer sehr störend. Auch der Wärmeübergang vom Ständer auf das Gehäuse und von dort nach außen wird durch Luftspalte zwischen Ständer und Gehäuse gehindert, was sich wiederum negativ auf die Leistung des Elektromotors auswirken kann.

Des Weiteren ist In der DE 19 73 001 U eine Befestigung eines Blechpakets in einem Gehäuse eines Stators eines Elektromotors offenbart, wobei axiale Spannstifte zwischen dem Blechpaket und dem Gehäuse angeordnet sind.

Weiter ist aus der US 2004/0217669 A1 ein Motor bekannt, welcher einen Statorkernstapel durch Laminieren mehrerer gerader Kerne bildet. Die Kerne weisen einen Kernrücken, eine Zahn und ein Verbindungsglied zum Verbinden der Kernrücken auf.

Die Aufgabe der Erfindung besteht demnach darin, einen Elektromotor und ein Verfahren zur Herstellung eines Elektromotors für einen Kraftfahrzeug-Stellantrieb anzugeben, die eine zuverlässige Fixierung der Statorbaugruppe im Motorgehäuse gewährleisten, und auch eine Demontage des Motors ohne Beschädigung der einzelnen Baugruppen erlauben, gleichzeitig jedoch soll eine Spaltbildung zwischen Statorbaugruppe und Gehäusewand zuverlässig ausgeschlossen werden.

Diese Aufgabe wird durch einen Elektromotor mit den im Anspruch 1 angegebenen Merkmalen und durch ein Verfahren mit den im Anspruch 8 angegebenen Merkmalen gelost.

Der erfindungsgemäße Elektromotor für einen Kraftfahrzeug-Stellantrieb weist ein Motorgehäuse und eine in das Motorgehäuse eingesetzte Rotorbaugruppe auf. Wobei die Rotorbaugruppe ein an einer Rotorwelle befestigtes Rotorpaket aufweist. In das Motorgehäuse ist eine Statorbaugruppe eingesetzt, die mehrere Statorzähne aufweist, wobei zumindest ein Statorzahn im Bereich seines Zahnrückens eine Einkerbung aufweist, in die ein Fixierstift eingesetzt ist.

Die Einkerbung und der in die Einkerbung eingesetzte Fixierstift wirken so zusammen, dass in Tangentialrichtung Kräfte auf die Statorbaugruppe wirken, wodurch der Außenumfang der Statorbaugruppe insgesamt aufgeweitet ist und dadurch wiederum in Radialrichtung auf das Motorgehäuse Kräfte wirken, wodurch die Statorbaugruppe (4) im Motorgehäuse (2) fixiert ist,
wobei weitere Statorzähne der Statorbaugruppe im Bereich ihres Zahnrückens eine fixierstiftlose Einkerbung aufweisen, die elastisch zusammendrückbar ist um einen Ausgleich der Aufweitung zu ermöglichen.

Vorteilhafte Ausgestaltungen und Weiterbildungen der Erfindung sind in den abhängigen Ansprüche angegeben.

Die Vorteile der Erfindung bestehen insbesondere darin, dass ein schadhafter Elektromotor bei Bedarf schnell und einfach wieder zerlegt und gegebenenfalls repariert werden kann, ohne dass eine zusätzliche Beschädigung auftritt oder Baugruppen gar dabei zerstört werden. Weiterhin wird durch die Erfindung erreicht, dass die Statorbaugruppe verschiebe- und verdrehsicher im Gehäuse des Elektromotors fixiert ist. Durch Einsetzen von Fixierstiften in dafür vorgesehene Einkerbungen in Außenbereichen von Zahnrücken einzelner Statorzähne erfolgt ein gleichmäßiges radiales Anpressen an die Innenfläche und somit ein Verspannen der Statorbaugruppe mit dem umgebenden Motorgehäuse über den gesamten Statorumfang ohne Spaltbildung zwischen Statorbaugruppe und Gehäusewand.

Aufgrund der Verwendung von Einkerbungen auch in den nicht mit Fixierstiften bestückten Statorzähnen wird ein Toleranzausgleich herbeigeführt, der darauf beruht, dass die nicht mit Fixierstiften versehenen Statorzähne in ihren radial außenliegenden Bereichen leicht federnde Eigenschaften haben. Weitere vorteilhafte Eigenschaften der Erfindung ergeben sich aus deren beispielhafter Erläuterung anhand der Figuren. Es zeigt
- Figur 1: eine Querschnittsdarstellung eines Elektromotors gemäß der Erfindung,
- Figur 2: eine Längsschnittdarstellung eines Elektromotors gemäß der Erfindung,
- Figur 3: eine vergrößerte Darstellung eines Teils des in Figur 1 gezeigten Elektromotors,
- Figur 4: zwei Einzelzähne einer Statorbaugruppe,
- Figur 5: die in Figur 4 dargestellten Einzelzähne nach deren Bewicklung,
- Figur 6: eine Querschnittsdarstellung einer Statorbaugruppe gemäß einer ersten Ausführungsform,
- Figur 7: eine vergrößerte Darstellung zur Veranschaulichung einer Statorbaugruppe gemäß einer zweiten Ausführungsform und
- Figur 8: ein vereinfachtes Flussdiagramm zur Veranschaulichung eines Verfahrens zur Herstellung eines Elektromotors gemäß der Erfindung.

Gleiche Gegenstände und Funktionseinheiten sind figurenübergreifend mit den gleichen Bezugszeichen bezeichnet.

Gemäß einer Ausführungsform weist die Statorbaugruppe einen über den Umfang durchgehend ausgebildeten Statorkern auf, der eine geschlossene Außenkontur hat und mit einer Vielzahl von nach innen gerichteten Statorzähnen ausgestattet ist. Ein solcher Statorkern kann als massives Bauteil einstückig ausgebildet sein. Vorzugsweise wird er jedoch aus mehreren Lagen dünner Blech-Stanzteile als Lamellen-Statorpaket aufgebaut.

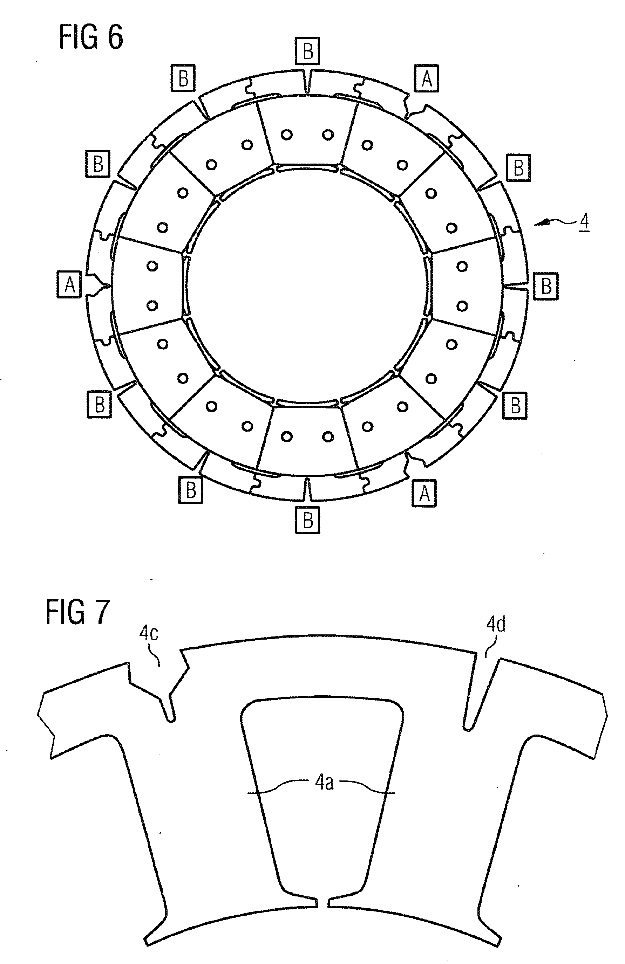

Die Figur 7 zeigt eine vergrößerte Darstellung eines Ausschnittes eines Statorkernes 4i zur Veranschaulichung einer Statorbaugruppe 4 gemäß dieser Ausführungsform. Die Statorzähne 4a weisen jeweils im Bereich ihres Zahnrückens unterschiedliche Einkerbungen 4c bzw. 4d auf. Die Statorzähne 4a, die eine Aussparung 4c aufweisen, in welche ein Fixierstift 5 eingesetzt werden soll, sind in Umfangsrichtung des Statorkernes 4i bzw. der Statorbaugruppe 4 in regelmäßigen Abständen angeordnet. Bei einer Anzahl von drei Fixierstiften 5 ergibt sich ein Abstand von jeweils 120° zwischen den einzelnen Fixierstiften 5.

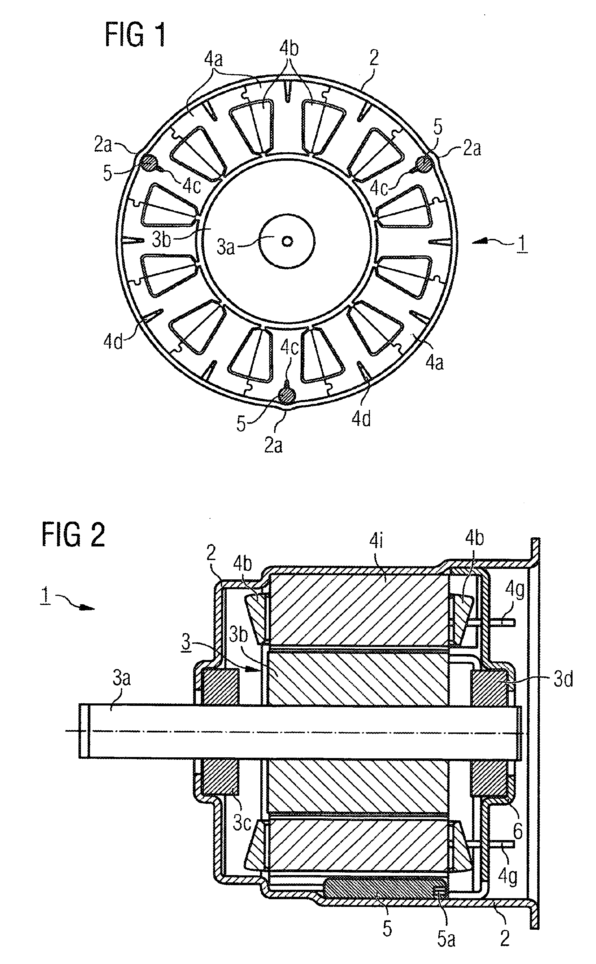

Die Figur 1 zeigt eine Querschnittsdarstellung eines beispielhaften Elektromotors gemäß der Erfindung. Der dargestellte Motor 1 weist ein Motorgehäuse 2 auf, in welches eine Statorbaugruppe und eine Rotorbaugruppe eingesetzt sind. Zur Rotorbaugruppe gehören eine Rotorwelle 3a und ein mit der Rotorwelle drehfest verbundenes Rotorpaket 3b. Die Statorbaugruppe weist Statorzähne 4a und eine Statorwicklung 4b auf. Des Weiteren ist jeder der Statorzähne im Außenbereich seines der Innenfläche des Motorgehäuses zugewandten Zahnrückens mit einer Einkerbung versehen. Diese Einkerbung ist im jeweiligen Zahnrücken mittig zum Zahn vorgesehen. Einige dieser Einkerbungen sind mit der Bezugsziffer 4c bezeichnet. Bei diesen Einkerbungen 4c handelt es sich um Einkerbungen, die im Außenbereich ihrer dem Motorgehäuse 2 zugewandten Öffnung vergleichsweise breit ausgebildet sind. In diese Einkerbungen 4c ist jeweils ein Fixierstift 5 eingesetzt. Bei diesen Fixierstiften 5 handelt es sich um Passstifte, die gegenüber den Einkerbungen ein Übermaß aufweisen oder um Innensechskant-Gewindestifte, die nach dem Einsetzen der Statorbaugruppe in das Motorgehäuse in Axialrichtung in die Einkerbungen 4c eingedrückt, eingepresst bzw. eingedreht werden.

Bei dem in der Figur 1 gezeigten Ausführungsbeispiel sind insgesamt drei Fixierstifte 5 vorgesehen, die in Einkerbungen 4c von Statorzähnen 4a eingepresst sind und die in Umfangsrichtung der Statorbaugruppe jeweils um 120° zueinander versetzt sind. Weiterhin geht aus der Figur 1 hervor, dass das Motorgehäuse in denjenigen Bereichen, in denen die Fixierstifte 5 eingesetzt sind, zusätzlich Ausbuchtungen 2a aufweist und die Fixierstifte 5 derart in die im Randbereich der Zahnrücken angeordneten Einkerbungen 4c der Statorzähne eingesetzt sind, dass sie mit einem über die Außenkontur des Statorpaketes hinausragenden Teil ihres Umfanges zusätzlich in die Ausbuchtungen 2a eingreifen. Je nach gegebenen Anforderungen können bei anderen Ausführungen selbstverständlich auch eine kleinere oder größere Anzahl von Fixierstiften auf den Umfang verteilt zum Einsatz kommen.

Durch das Einsetzen bzw. Einpressen der Stifte 5 in die Einkerbungen 4c wird erreicht, dass die Statorbaugruppe verschiebefest und verdrehfest im Motorgehäuse fixiert ist.

Vorzugsweise weisen alle anderen, nicht mit einem Fixierstift versehenen Statorzähne ebenfalls im Bereich ihres Zahnrückens Einkerbungen auf. Diese Einkerbungen sind in der Figur 1 mit der Bezugsziffer 4d bezeichnet. Die Außenbereiche dieser Einkerbungen 4d sind schmäler ausgebildet als die Außenbereiche der Einkerbungen 4c. Die Anordnung dieser Einkerbungen 4d hat den Vorteil, dass die mit den Einkerbungen 4d ausgestatteten Statorzähne in ihren radial außen liegenden, der Innenfläche des Motorgehäuses 2 benachbarten Bereichen federnde Eigenschaften haben. Dies führt zu einem Ausgleich von ggf. vorliegenden Toleranzen und begünstigt ein gleichmäßiges Anpressen der Statorbaugruppe an das Motorgehäuse.

Die Einkerbungen 4c und 4d sind an ihren radial inneren, vom Motorgehäuse abgelegenen Ende, dem Kerbgrund, jeweils abgerundet ausgebildet. Dies wirkt der Kerbwirkung entgegen und hat den Vorteil, dass die beim Einsetzen der Fixierstifte und im späteren Betrieb auftretenden Kräfte nicht zu einem Einreißen der Einkerbungen im Kerbgrund und so zu einer fortschreitenden Spaltung der jeweiligen Statorzähne führen.

Sind die Fixierstifte 5 - wie es bereits oben angegeben wurde - in Form von Innensechskant-Gewindestiften realisiert, dann ist ein späteres Zerlegen des Motors mittels eines geeigneten Werkzeugs in einfacher Weise, durch Ausdrehen der Fixierstifte, schnell durchführbar.

Die Figur 2 zeigt eine Längsschnittdarstellung eines Elektromotors gemäß der Erfindung. Auch aus dieser Darstellung ist ersichtlich, dass der Elektromotor ein Motorgehäuse 2 aufweist, in welches eine Rotorbaugruppe 3 eingesetzt ist, welche eine Rotorwelle 3a und ein Rotorpaket 3b aufweist. Weiterhin weist der in der Figur 2 dargestellte Motor eine Statorbaugruppe mit einem Statorzähne aufweisenden Statorkern 4i sowie eine Statorwicklung 4b auf. Die Wicklungsanschlüsse der Statorwicklung 4b sind mit der Bezugsziffer 4g bezeichnet. Ferner geht aus der Figur 2 hervor, dass die Rotorwelle 3a mittels eines Lagers 3c in einer Lagerstufe des Motorgehäuses 2 und mittels eines weiteren Lagers 3d in einer Lagerstufe eines Lagerschildes 6 drehbar gelagert ist. Des Weiteren ist aus der Figur 2 ein in eine Einkerbung eines Statorzahnes eingesetzter Fixierstift 5 ersichtlich, der zwischen dem Statorkern 4i und dem Motorgehäuse 2 platziert ist. Der gezeigte Fixierstift ist mit einem Innensechskant 5a ausgestattet, so dass er bei Bedarf mittels eines geeigneten Werkzeugs schnell und einfach wieder entfernt werden kann.

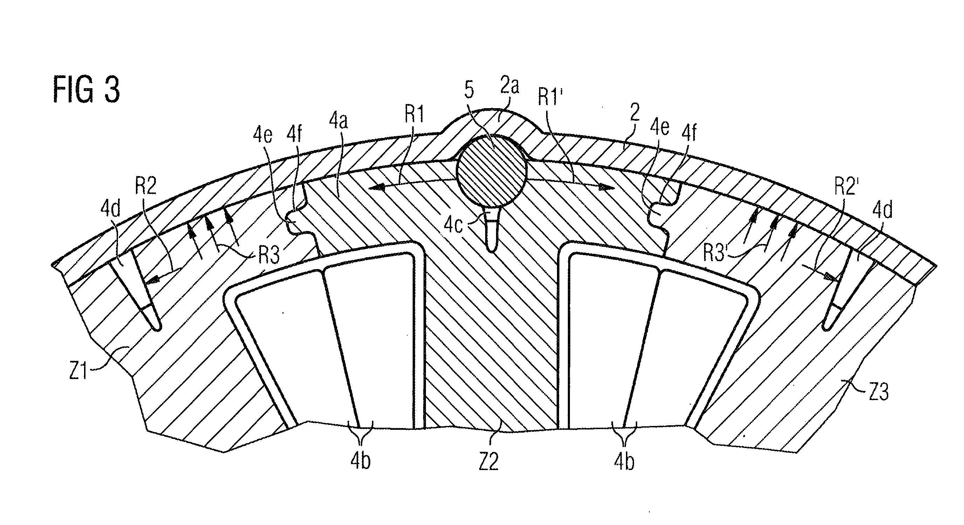

Die Figur 3 zeigt eine vergrößerte Darstellung eines Teils des in der Figur 1 gezeigten Elektromotors. In dieser vergrößerten Darstellung ist erkennbar, dass diese Ausführung der Statorbaugruppe 4 aus separaten, als Einzelzahnsegmente ausgebildeten Statorzähnen 4a besteht. In Figur 3 sind drei benachbarte Einzelzahnsegmente gezeigt, die mit den Bezugszeichen Z1, Z2 und Z3 bezeichnet sind. Das mittig angeordnete Einzelzahnsegment Z2 weist eine Einkerbung 4c auf, in welche ein Fixierstift 5 eingesetzt ist. Das Motorgehäuse im Bereich dieses Fixierstiftes 5 weist eine Ausbuchtung 2a auf. Die Einzelzahnsegmente Z1, Z2 und Z3 sind jeweils mit einer Statorwicklung 4b ausgestattet, bei welcher es sich beim gezeigten Ausführungsbeispiel um Einzelzahnwicklungen handelt.

Die Einzelzahnsegmente sind mit ihren Zahnrücken so aneinander gesetzt, dass ein geschlossener, runder Stator ausgebildet ist. Dabei weisen die aneinander liegenden Seitenflächen der Zahnrücken jeweils Aus- und Einbuchtungen 4e/4f auf, die nach Art von Nut und Feder ineinander greifen. Eine an der linken Seitenfläche des Zahnrückens des Einzelzahnsegmentes Z2 vorgesehene Ausbuchtung 4e greift dabei in eine Einbuchtung 4f in der rechten Seitenfläche des Zahnrückens des Einzelzahnsegmentes Z1 ein. Bei den weiteren Einzelzahnsegmenten setzt sich dieses Prinzip fort.

Die Einzelzahnsegmente Z1 und Z3 weisen im Bereich ihres der Innenfläche des Motorgehäuses 2 zugewandten Zahnrückens jeweils eine Einkerbung 4d auf. In diese Einkerbungen 4d, die im Bereich ihrer Öffnung schmäler sind als die Einkerbung 4c, sind keine Fixierstifte eingesetzt.

Durch das Einsetzen des Fixierstiftes 5 in die Einkerbung 4c im Bereich des Zahnrückens des Einzelzahnsegmentes Z2 werden in Tangentialrichtung wirkende Kräfte ausgeübt, wie es in der Figur 3 durch die Richtungspfeile R1 und R1' veranschaulicht ist. Diese in Tangentialrichtung wirkenden Kräfte werden auf die benachbarten Statorzähne übertragen und wirken insgesamt aufweitend auf den Außenumfang der Statorbaugruppe. Dadurch entstehen in Radialrichtung auf das Motorgehäuse wirkende Kräfte, wie es durch die Pfeile R3 und R3' gezeigt ist.

Die radiale Verspannung durch Aufweitung mittels der tangetial wirkenden Kräfte hat hierbei den zusätzlichen Vorteil; dass die Einzelzahnsegmente auch tangential gegeneinander verspannt werden. Der entstehende Anpressdruck zwischen den Zahnsegmenten verkleinert oder verhindert auch hier Luftspalte zwischen den Segmenten und verbessert den magnetischen Fluss, was sich positiv auf die Motorleistung auswirkt.

Da die mögliche Aufweitung des Umfanges der Statorbaugruppe durch das Motorgehäuse begrenzt ist, muss ein elastischer Ausgleich der Aufweitung stattfinden, der gleichzeitig die Anpresskräfte zwischen Statorbaugruppe und Motorgehäuse aufrechterhält. Durch die Übertragung der aufweitenden Kräfte R1/R1' in tangentialer Richtung wirken diese auf die fixierstiftlosen Einkerbungen 4d, die dadurch elastisch federnd zusammengedrückt werden und so den Ausgleich der Aufweitung ermöglichen, wie es durch die Pfeile R2 und R2' veranschaulicht ist. Durch diese Kräfteverteilung wird erreicht, dass die Statorbaugruppe in Radialrichtung fest an das Motorgehäuse 2 angepresst wird, so dass eine drehfest und verschiebefeste Fixierung der Statorbaugruppe im Motorgehäuse gewährleistet ist.

Gemäß dieser ersten, oben im Zusammenhang mit den Figuren 1 und 3 beschriebenen Ausführungsform, ist die Statorbaugruppe mit einer Vielzahl von Einzelzahnsegmenten aufgebaut.

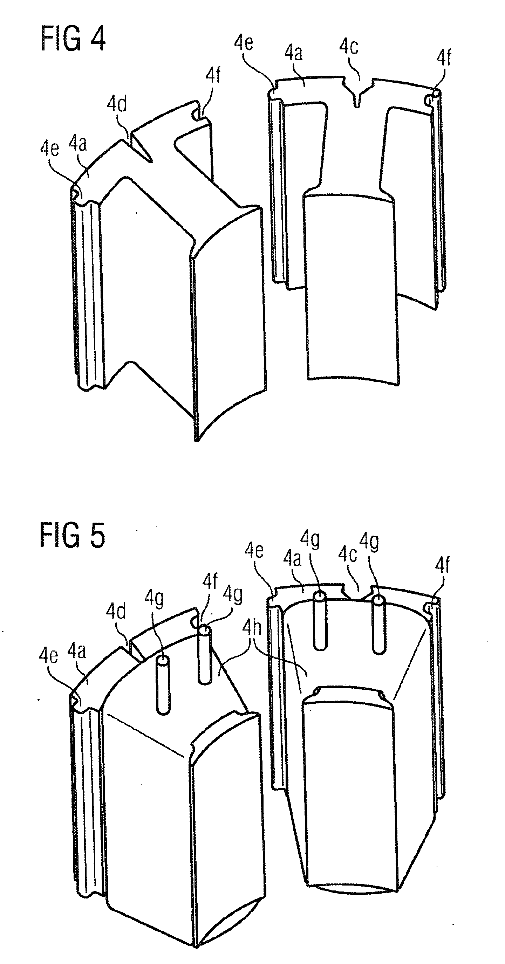

Die Figur 4 zeigt zwei Einzelzahnsegmente, wie sie bei der ersten Ausführungsform vorgesehen sind in perspektivischer Darstellung, einzeln und unbewickelt. Bei dem in der Figur 4 auf der linken Seite dargestellten Einzelzahnsegment handelt es sich um ein Segment mit einer Einkerbung 4d, die nicht zur Aufnahme eines Fixierstiftes vorgesehen ist, im Bereich seines Zahnrückens. Bei dem in der Figur 4 auf der rechten Seite dargestellten Einzelzahnsegment handelt es sich um ein Segment, das im Bereich seines Zahnrückens mit einer breiteren Einkerbung 4c, zur Aufnahme eines Fixierstiftes, ausgestattet ist. Gut erkennbar sind auch die Aus- und Einbuchtungen 4e/4f an den Seitenflächen der Zahnrücken, die beim Aneinanderfügen der Einzelzahnsegmente ineinandergreifen.

Diese Einzelzähne werden in einem nächsten Schritt, wie es in der Figur 5 veranschaulicht ist, jeweils separat mit einer Einzelzahnwicklung 4h bewickelt. Die Wicklungsanschlüsse dieser Wicklungen sind in der Figur 5 jeweils mit der Bezeichnung 4g gekennzeichnet.

Die in der Figur 5 gezeigten, jeweils mit einer Einzelwicklung 4h versehenen Einzelzahnsegmente werden mit weiteren, jeweils mit einer Wicklung 4h versehenen Einzelzahnsegmenten zu einer Statorbaugruppe 4 zusammengesetzt, wie sie in der Figur 6 gezeigt ist. In der Figur 6 sind insgesamt drei Einzelzahnsegmente vom Typ A und insgesamt 9 Einzelzahnsegmente von Typ B gezeigt. Ein Einzelzahnsegment vom Typ A ist ein Einzelzahnsegment, welches im Bereich seines Zahnrückens mit einer Einkerbung 4c versehen ist, also einer Einkerbung, in welche nach dem Einsetzen der Statorbaugruppe in das Motorgehäuse ein Fixierstift 5 eingesetzt wird. Ein Einzelzahnsegment vom Typ B ist hingegen ein Einzelzahnsegment, welches im Bereich seines Zahnrückens mit einer Einkerbung 4d versehen ist, in welche nach dem Einsetzen der Statorbaugruppe 4 in das Motorgehäuse 2 kein Fixierstift 5 eingesetzt wird.

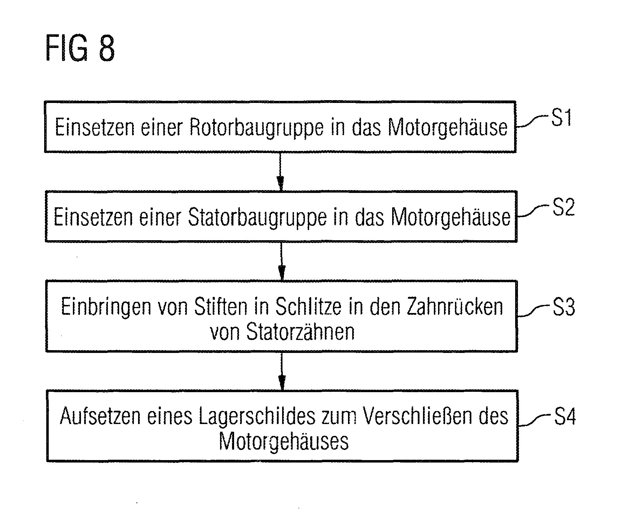

Die Figur 8 zeigt ein Flussdiagramm zur Veranschaulichung eines Verfahrens zur Herstellung eines Elektromotors gemäß der Erfindung. In einem ersten Schritt S1 wird ein Motorgehäuse 2 bereitgestellt. Das Motorgehäuse 2 kann topfförmig, einseitig offen oder rohrförmig, beidseitig offen, ausgebildet sein. Auch eine vormontierte Baugruppe aus einem rohrförmigen Gehäuse mit einem auf einer Stirnseite angebrachten Lagerschild ist möglich.

Danach erfolgt in einem zweiten Schritt S2 das Einsetzen einer Statorbaugruppe 4 gemäß der oben beschriebenen ersten oder zweiten Ausführungsform in Axialrichtung in das Motorgehäuse 2.

Ist die Statorbaugruppe 4 in das Motorgehäuse 2 eingesetzt, dann erfolgt deren Befestigung im Motorgehäuse 2 dadurch, dass in einem dritten Schritt S3 eine Anzahl von Fixierstiften 5 in Axialrichtung in im Bereich des Zahnrückens einzelner Statorzähne 4a vorgesehene Einkerbungen 4c eingefügt werden. Vorzugsweise werden dabei insgesamt drei Fixierstifte eingesetzt, die in Umfangsrichtung der Statorbaugruppe 4 um jeweils 120° voneinander beabstandet sind.

Je nach Ausführung des Motorgehäuses 2 kann es erforderlich sein zunächst in einem weiteren Montageschritt S3', in Figur 8 gestrichelt dargestellt, zunächst ein Lagerschild mit Lager 3c für die Rotorwelle 3a auf eine Stirnseite des Motorgehäuses 2 zu montieren.

Im nächsten Montageschritt S4 wird nun eine Rotorbaugruppe 3, die eine Rotorwelle 3a und ein an dieser befestigtes Rotorpaket 3b aufweist, in Axialrichtung in das Motorgehäuse 2 und ggf. gleichzeitig mit der Rotorwelle 3a in ein erstes Lager 3c eingesetzt.

Schließlich erfolgt in einem fünften Montageschritt S5 das Aufsetzen eines Lagerschildes (6) mit einem zweiten Lager (3d) für die Rotorwelle (3a) auf der dem ersten Lagerschild bzw. einem Gehäustopf-Boden gegenüberliegenden Stirnseite des Motorgehäuses (2).

## Patentansprüche

1. Elektromotor (1) für einen Kraftfahrzeug-Stellantrieb, mit
- einem Motorgehäuse (2),
- einer in das Motorgehäuse (2) eingesetzten Rotorbaugruppe (3), die ein an einer Rotorwelle (3a) befestigtes Rotorpaket (3b) aufweist, und
- einer in das Motorgehäuse (2) eingesetzten Statorbaugruppe (4), die Statorzähne (4a) aufweist,
- wobei zumindest ein Statorzahn (4a) im Bereich seines Zahnrückens eine Einkerbung (4c) aufweist, in die ein Fixierstift eingesetzt ist,
wobei
- die Einkerbung (4c) und der in die Einkerbung (4c) eingesetzte Fixierstift (5) so zusammenwirken, dass in Tangentialrichtung Kräfte (R1, R1') auf die Statorbaugruppe wirken, wodurch der Außenumfang der Statorbaugruppe insgesamt aufgeweitet ist und dadurch wiederum in Radialrichtung auf das Motorgehäuse Kräfte (R3, R3') wirken, wodurch die Statorbaugruppe (4) im Motorgehäuse (2) fixiert ist, **dadurch gekennzeichnet, dass** weitere Statorzähne (4a) der Statorbaugruppe (4) im Bereich ihres Zahnrückens eine fixierstiftlose Einkerbung (4d) aufweisen, die elastisch federnd zusammendrückbar ist, um einen Ausgleich der Aufweitung zu ermöglichen.

2. Elektromotor nach Anspruch 1,
**dadurch gekennzeichnet, dass** die Statorbaugruppe (4) drei Statorzähne (4a) aufweist, die eine Einkerbung (4c) und einen darin eingesetzten Fixierstift (5) aufweisen wobei die Statorzähne (4a) in Umfangsrichtung der Statorbaugruppe (4) jeweils um 120° zueinander versetzt sind.

3. Elektromotor nach einem der vorhergehenden Ansprüche,
**dadurch gekennzeichnet, dass**
die Fixierstifte (5) Passstifte sind, die Übermaß gegenüber den Einkerbungen (4c) aufweisen, wodurch eine Klemmwirkung zwischen Statorbaugruppe (4) und Motorgehäuse (2) erzeugt ist.

4. Elektromotor nach einem der vorhergehenden Ansprüche,
**dadurch gekennzeichnet, dass**
die Fixierstifte (5) Innensechskant-Gewindestifte sind.

5. Elektromotor nach einem der vorhergehenden Ansprüche,
**dadurch gekennzeichnet, dass**
die Statorbaugruppe (4) einen Statorzähne (4a) aufweisenden, in Umfangsrichtung durchgehenden Statorkern (4i) aufweist.

6. Elektromotor nach einem der Ansprüche 1 - 4,
**dadurch gekennzeichnet, dass**
die Statorbaugruppe (4) einen aus Einzelzahnsegmenten (ZI, Z2, ...) zusammengesetzten Statorkern (4i) aufweist.

7. Elektromotor nach einem der vorhergehenden Ansprüche,
**dadurch gekennzeichnet, dass**
das Motorgehäuse (2) im Bereich seines Innenumfanges, in denjenigen Bereichen in denen die Fixierstifte (5) eingesetzt sind, mit Ausbuchtungen (2a) ausgestattet ist und die Fixierstifte (5) derart in die Einkerbungen (4c) der Statorzähne (4a) eingesetzt sind, dass sie mit einem über die Außenkontur des Statorpaketes (4) hinausragenden Teil ihres Umfanges in die Ausbuchtungen (2a) eingreifen.

8. Verfahren zur Herstellung eines Elektromotors für einen Kraftfahrzeug-Stellantrieb mit folgenden Schritten:
- Einsetzen einer Statorzähne (4) aufweisenden Statorbaugruppe (4) in Axialrichtung in ein Motorgehäuse (2),
- Einsetzen von Fixierstiften (5) in im Bereich des Zahnrückens der Statorzähne (4a) vorgesehene Einkerbungen (4c) in Axialrichtung der Statorbaugruppe (4) derart, dass die Einkerbung (4c) und der Fixierstift (5) so zusammenwirken, dass in Tangentialrichtung wirkende Kräfte ausgeübt werden, die insgesamt aufweitend auf den Außenumfang der Statorbaugruppe wirken, wodurch wiederum in Radialrichtung auf das Motorgehäuse wirkende Kräfte entstehen und die Statorbaugruppe (4) im Motorgehäuse (2) fixiert wird, wobei weitere Statorzähne (4a) der Statorbaugruppe (4) im Bereich ihres Zahnrückens eine fixierstiftlose Einkerbung (4d) aufweisen, die elastisch federnd zusammengedrückt wird und einen Ausgleich der Aufweitung ermöglicht,
- Einsetzen einer Rotorbaugruppe (3) in Axialrichtung in das Motorgehäuse (2) und
- Aufsetzen eines Lagerschildes (6) in Axialrichtung zum Verschließen des Motorgehäuses (2).

9. Verfahren nach Anspruch 8,
**dadurch gekennzeichnet, dass**
ein in Axialrichtung erfolgendes Einsetzen von drei Fixierstiften (5) erfolgt, die in Umfangsrichtung der Statorbaugruppe (4) um jeweils 120° voneinander beabstandet sind.

## Claims

1. Electric motor (1) for a motor vehicle actuating drive, having
- a motor housing (2),
- a rotor module (3) which is inserted into the motor housing (2) and comprises a rotor assembly (3b) attached to a rotor shaft (3a), and
- a stator module (4) which is inserted into the motor housing (2) and comprises stator teeth (4a),
wherein at least one stator tooth (4a) comprises a notch (4c) in the region of the rear of its tooth, a fixing pin being inserted into said notch,
wherein the notch (4c) and the fixing pin (5) inserted into the notch (4c) co-operate such that forces (R1, R1') act on the stator module in the tangential direction, whereby the outer periphery of the stator module is widened as a whole and as a result forces (R3, R3') in turn act on the motor housing in the radial direction, whereby the stator module (4) is fixed in the motor housing (2),
**characterised in that** further stator teeth (4a) of the stator module (4) comprise a fixing pin-less notch (4d) in the region of the rear of their teeth, which notch can be compressed in an elastically resilient manner in order to allow equalisation of the widening.

2. Electric motor as claimed in Claim 1, **characterised in that** the stator module (4) comprises three stator teeth (4a) which comprise a notch (4c) and a fixing pin (5) inserted therein, wherein the stator teeth (4a) are offset with respect to each other in each case by 120º in the peripheral direction of the stator module (4).

3. Electric motor as claimed in any one of the preceding claims, **characterised in that** the fixing pins (5) are alignment pins which are oversized with respect to the notches (4c), whereby a clamping effect is produced between the stator module (4) and the motor housing (2).

4. Electric motor as claimed in any one of the preceding claims, **characterised in that** the fixing pins (5) are hexagon socket set screws.

5. Electric motor as claimed in any one of the preceding claims, **characterised in that** the stator module (4) comprises a stator core (4i) which comprises stator teeth (4a) and is continuous in the peripheral direction.

6. Electric motor as claimed in any one of Claims 1-4, **characterised in that** the stator module (4) comprises a stator core (4i) composed of individual tooth segments (Z1, Z2, ...).

7. Electric motor as claimed in any one of the preceding claims, **characterised in that** the motor housing (2) is provided with bulges (2a) in the region of its inner periphery, in those regions in which the fixing pins (5) are inserted, and the fixing pins (5) are inserted into the notches (4c) of the stator teeth (4a) such that they engage into the bulges (2a) with a part of their periphery protruding beyond the outer contour of the stator assembly (4).

8. Method of producing an electric motor for a motor vehicle actuating drive, having the following steps:
- inserting a stator module (4) comprising stator teeth (4) into a motor housing (2) in the axial direction,
- inserting fixing pins (5) into notches (4c), provided in the region of the rear of the stator teeth (4a), in the axial direction of the stator module (4) such that the notch (4c) and the fixing pin (5) co-operate such that forces acting in the tangential direction are exerted and act on the outer periphery of the stator module on the whole in a widening manner, whereby in turn forces acting on the motor housing in the radial direction are produced and the stator module (4) is fixed in the motor housing (2), wherein further stator teeth (4a) of the stator module (4) comprise a fixing pin-less notch (4d) in the region of the rear of their teeth, which notch is compressed in an elastically resilient manner and allows an equalisation of the widening,
- inserting a rotor module (3) into the motor housing (2) in the axial direction, and
- placing a bearing shield (6) in the axial direction in order to close the motor housing (2).

9. Method as claimed in Claim 8, **characterised in that** three fixing pins (5) are inserted in the axial direction and are spaced apart from each other in each case by 120º in the peripheral direction of the stator module (4).

## Revendications

1. Moteur électrique (1) pour un mécanisme de commande de véhicule automobile, comportant :
- un carter de moteur (2),
- un ensemble rotor (3) inséré dans le carter de moteur (2) et présentant un bloc rotor (3b) fixé à un arbre de rotor (3a), et
- un ensemble stator (4) inséré dans le carter de moteur (2) et présentant des dents de stator (4a),
au moins une dent de stator (4a) comportant, au niveau de son dos de dent, une entaille (4c) dans laquelle est insérée une cheville d'immobilisation,
l'entaille (4c) et la cheville d'immobilisation (5) insérée dans l'entaille (4c) coopérant de telle manière que des forces (R1, R1') agissent sur l'ensemble stator en direction tangentielle, se traduisant par le pourtour extérieur de l'ensemble stator qui est élargit dans sa totalité et permettant ainsi, là encore, que des forces (R3 ; R3') agissent sur le carter de moteur en direction radiale, ce qui immobilise l'ensemble stator (4) à l'intérieur du carter de moteur (2), **caractérisé en ce que** d'autres dents de stator (4a) de l'ensemble stator (4) comportent, au niveau de leur dos de dent, une entaille (4d) sans cheville d'immobilisation qui peut être comprimée élastiquement pour permettre de compenser l'élargissement.

2. Moteur électrique selon la revendication 1, **caractérisé en ce que** l'ensemble stator (4) comporte trois dents de stator (4a) qui présentent une entaille (4c) et une cheville d'immobilisation (5) qui y est insérée, les dents de stator (4a) étant décalées l'une par rapport à l'autre de 120° respectivement en direction périphérique de l'ensemble stator (4).

3. Moteur électrique selon l'une des revendications précédentes, **caractérisé en ce que** les chevilles d'immobilisation (5) sont des chevilles de serrage qui ont une surmesure par rapport aux entailles (4c), ce qui produit un effet de serrage entre l'ensemble stator (4) et le carter de moteur (2).

4. Moteur électrique selon l'une des revendications précédentes, **caractérisé en ce que** les chevilles d'immobilisation (5) sont des tiges filetées à six pans creux.

5. Moteur électrique selon l'une des revendications précédentes, **caractérisé en ce que** l'ensemble stator (4) comporte un noyau de stator (4i) comportant des dents de stator (4a)et continu en direction périphérique.

6. Moteur électrique selon l'une des revendications 1 à 4, **caractérisé en ce que** l'ensemble stator (4) comporte un noyau de stator (4i) composé de segments à une seule dent (Z1, Z2, etc.).

7. Moteur électrique selon l'une des revendications précédentes, **caractérisé en ce que**, au niveau de sa circonférence intérieure, le carter de moteur (2) est muni de bossages (2a), dans les zones où sont insérées les chevilles d'immobilisation (5), et les chevilles d'immobilisation (5) sont insérées dans les entailles (4c) des dents de stator (4a) de telle manière qu'elles s'engagent dans les bossages (2a) par une partie de leur pourtour qui dépasse du contour extérieur du bloc stator (4).

8. Procédé pour fabriquer un moteur électrique pour un mécanisme de commande de véhicule automobile, comportant les étapes suivantes :
- insérer un ensemble stator (4) comportant des dents de stator (4a) en direction axiale dans un carter de moteur (2),
- insérer, en direction axiale de l'ensemble stator (4), des chevilles d'immobilisation (5) dans des entailles (4c) prévues au niveau du dos de dent des dents de stator (4a), de telle manière que l'entaille (4c) et la cheville d'immobilisation (5) coopèrent de telle manière que s'exercent des forces agissant en direction tangentielle et ayant un effet élargissant sur le pourtour extérieur de l'ensemble stator dans sa totalité, ce qui se traduit par la génération de forces (R3 ; R3') qui agissent, là encore, sur le carter de moteur en direction radiale et par l'immobilisation de l'ensemble stator (4) à l'intérieur du carter de moteur (2), d'autres dents de stator (4a) de l'ensemble stator (4) comportant, au niveau de leur dos de dent, une entaille (4d) sans cheville d'immobilisation qui est comprimée élastiquement et permet de compenser l'élargissement,
- insérer en direction axiale un ensemble rotor (3) dans le carter de moteur (2), et
- poser en direction axiale une flasque (6) de palier pour obturer le carter de moteur (2).

9. Procédé selon la revendication 8, **caractérisé en ce que**, en direction axiale, l'insertion de trois chevilles d'immobilisation (5) est réalisée, qui sont décalées l'une par rapport à l'autre de 120° respectivement en direction périphérique de l'ensemble stator (4).
